# EUROPÄISCHE PATENTSCHRIFT

(11) **EP 2 392 883 B1**
(45) Veröffentlichungstag und Bekanntmachung des Hinweises auf die Patenterteilung: **08.11.2017**
(21) Anmeldenummer: 11166804.2
(22) Anmeldetag: 19.05.2011
(51) Int. Cl.: F28F 9/00, B60K 11/04

(54) **Kühlmittelkühler**
Coolant cooler
Refroidisseur d'agent refroidissant

(30) Priorität: 04.06.2010 DE 102010029698
(43) Veröffentlichungstag der Anmeldung: 07.12.2011
(73) Patentinhaber: MAHLE Behr GmbH & Co. KG, 70469 Stuttgart (DE)
(72) Erfinder: Augenstein, Claus, 70839, Gerlingen (DE); Schnaars, Alexandra, 71672 Marbach am Neckar (DE); Griesheimer, Peter, 70569, Stuttgart (DE)
(74) Vertreter: Grauel, Andreas

(56) Entgegenhaltungen:
- EP-A1- 0 401 571
- EP-A2- 1 757 888
- WO-A1-97/42049
- DE-A1-102007 006 241
- DE-U1- 29 712 351
- FR-A1- 2 779 220
- US-B1- 6 273 182

## Beschreibung

Die Erfindung betrifft einen Kühlmittelkühler, mit einem Kuhlerblock und einem mit dem Kühlerblock verbundenen Kühlmittelkasten, weicher mindestens ein steifes Befestigungsmittel und mindestens ein flexibles Befestigungsmittel zur Verbindung mit einem Ladeluftkühler aufweist. Einen Kühlmittelkühler gemäß der Präambel des Anspruchs 1 zeigt die Schrift DE 10 2007 006 241 A1.

Kühlmittelkühler werden im Luftstrom der Fahrzeugfront eines Kraftfahrzeugs verbaut. Sie haben die Aufgabe, die durch die Verbrennung im Motor erzeugte Wärme, die durch das Kühlmittel aufgenommen wird, an die Außenluft abzugeben, Der Kühlmittelkühler besteht dabei aus einem Kühlerblock und einem Kühlmittelkasten mit allen erforderlichen Anschlüssen und Befestigungselementen. Insbesondere bei Nutzkraftwagen sind Kühlmittelkühler an modultragenden Stahlabdeckungen angeordnet. Ist ein stabiler und steifer Ladeluftkühler im Fahrzeug vorhanden, wird der Kühlmittelkühler an diesem im Fahrzeug befestigt. Wird der Ladeluftkühlers als modultragendes Bauteil für den Kühlmittelkühler verwendet, so ist die Verbindung zum Kühlmittelkühler für die Dauerhaltbarkeit des Kühlmittelkühlers sowie des Ladeluftkühlers entscheidend,

Aus der EP 1 793 191 B1 ist ein Kühlmodul mit einem Kühlmittelkühler bekannt, bei welchem der Kühlmittelkühler von zwei Kühlmittelkästen eingeschlossen ist. An den Ecken der beiden rechteckig ausgebildeten Kühlmittelkästen sind Befestigungsmittel für einen Ladeluftkühler angeordnet. Von diesen vier vorhandenen Befestigungsmitteln ist nur eines starr ausgebildet, während die anderen drei flexibel sind. Die flexiblen Befestigungsmittel erlauben dabei eine Ausdehnung in eine Richtung horizontal zur Fahrzeugrichtung oder senkrecht zur Fahrtrichtung des Fahrzeuges oder in beide Richtungen. Nachteilig bei dieser Ausführungsform ist, dass aus der Relativbewegung der Befestigungsmittel zu der jeweiligen Halterung des Ladeluftkühlers Reibung entsteht, die zu einem Verschleiß der Befestigungsmittel führt. Des Weiteren konzentriert sich die Übertragung der durch die Beschleunigung des Kraftfahrzeuges in eine Richtung horizontal oder senkrecht zur Fahrtrichtung entstehenden Massenkräfte im Wesentlichen auf das starre Befestigungselement. Die flexiblen Befestigungselemente können bei dieser Ausgestaltung keine oder nur in eine Richtung Massenkräfte aufnehmen, wodurch es zu einer höheren Belastung des Kühlmittelkühlers im Bereich des starren Befestigungsmittels kommt. Darüber hinaus weist jedes der flexiblen Befestigungsmittel eine andere Form auf. So sind zusätzliche Bauteile, wie Halter und Klammern notwendig, um diese Befestigungsmittel herzustellen. Weiterhin ist es erforderlich, für jedes Befestigungsmittel ein eigenes Werkzeug zur Herstellung dieses Befestigungsmittels vorzuhalten. Diese vier spezifisch ausgebildeten Befestigungsmittel erfordern somit einen hohen Fertigungsaufwand.

Der Erfindung liegt somit die Aufgabe zu Grunde, einen Kühlmittelkühler anzugeben, welcher zur Verbindung mit einem Ladeluftkühler ausreichend flexible Befestigungsmittel aufweist, die die Wärmeausdehnung des Kühlmittelkühlers aufnehmen können, aber andererseits auch steif genug sind, um der durch Beschleunigung des Kraftfahrzeuges hervorgerufenen mechanischen Belastung schadlos zu widerstehen. Darüber hinaus soll der Kühlmittelkühler einfach in seiner Herstellung sein.

Erfindungsgemäß wird die Aufgabe dadurch gelöst, dass das flexible Befestigungsmittel Z-ähnlich ausgebildete ist. Diese Gestaltung erlaubt eine besonders flexible Bewegung des Befestigungsmittels, um die am Kühlmittelkasten auftretenden Temperaturänderungen auszugleichen, Insbesondere die Anordnung der Befestigungsmittel an der Außenkontur des Kühlmittelkastens, speziell an Positionen außerhalb von Kühlmittel führenden Teilen des Kühlmittelkastens, verhindert ein Austreten des Kühlmittels, wenn auf Grund eines Defektes des Befestigungsmittels der Kühlmittelkasten geschädigt wird. Weiters sind das mindestens eine steife Befestigungsmittel und das mindestens eine flexible Befestigungsmittel des Kühlmittelkastens über eine Schraubverbindung mit dem Ladeluftkühler verbindbar. Da sowohl das steife als auch das flexible Befestigungsmittel über eine Schraubverbindung mit dem Ladeluftkühler verbunden werden können, ist eine einfach Herstellung dieser Verbindung in nur einem Arbeitsvorgang möglich. Dadurch werden die Herstellungskosten reduziert als auch die Herstellungsdauer verkürzt.

In einer Variante ist die Schraubverbindung selbstschneidend. Dies hat den Vorteil, dass nur ein Werkzeug zur Verschraubung aller Befestigungsmittel benötigt wird, was die Herstellungskosten weiter reduziert. Auf vorgeformte Gewinde in dem Kunststoff des Kühlmittelkastens wird somit weitgehend verzichtet, wodurch ein Arbeitsschritt eingespart wird.

Alternativ weisen das mindestens eine steife Befestigungsmittel und/oder das mindestens eine flexible Befestigungsmittel einen Gewindeeinsatz auf, in welchen eine Schraube zur Verbindung mit dem Ladeluftkühler eingeführt werden kann. Durch die Verwendung dieser Gewindeeinsätze erfolgt eine Verschraubung zwischen Kühlmittelkasten und Ladeluftkühler mit Hilfe von metrischen Standardschrauben oder von in den Kühlmittelkasten eingeschraubten Gewindebolzen. Die Verwendung solcher Standardbauteile verringert ebenfalls die Kosten des Herstellungsprozesses.

In einer Weiterbildung kann die Schraubverbindung an einem, dem Kühlmittelkasten abgewandten Ende des mindestens einen steifen Befestigungsmittels und/oder des mindestens einen flexiblen Befestigungsmittels in diese eingreifen. Dadurch wird gewährleistet, dass Kühlmittel führende Bereiche des Kühlmittelkastens durch die Schraubverbindung nicht verletzt werden können, wodurch ein Austreten des Kühlmittels aus dem Kühlmittelkasten sicher verhindert wird.

Vorteilhafterweise sind das mindestens eine steife Befestigungsmittel und das mindestens eine flexible Befestigungsmittel so an der Außenkontur des Kuhlmittelkastens angeordnet, dass eine Kontaktfläche zwischen dem Ladeluftkühler und dem Kühlmittelkuhler innerhalb der Bodenaußenkontur in Fahrtrichtung eines Kraftfahrzeuges nahe am Massenschwerpunkt des Kühlmittelkühlers liegen kann. Durch diese Anordnung nahe dem Massenschwerpunkt werden eine besonders verschleißfreie Befestigung und eine bessere Festigkeit der Verbindung zwischen Kühlmittelkühler und Ladeluftkühler erreicht. Auch die Trennung der Aufgaben der Befestigungsmittel, wonach die flexiblen Befestigungsmittel für die Kompensation der Längsausdehnung des Kühlmittelkühlers in Folge von Temperaturschwankungen im Kühlmittelkühler verantwortlich sind und die steifen Befestigungsmittel die mechanische Belastung während der Fahrt des Kraftfahrzeuges aufnehmen, wird dadurch besonders gefördert.

In einer vorteilhaften Ausgestaltung besteht der Kühlmittelkasten aus einem oberen Kühlmittelkasten und einem unteren Kühlmittelkasten, wobei zwischen dem oberen Kühlmittelkasten und dem unteren Kühlmittelkasten der Kühlerblock eingebunden ist, wobei an dem oberen Kühlmittelkasten und an dem unteren Kühlmittelkasten jeweils ein steifes Befestigungsmittel und ein flexibles Befestigungsmittel derart angeordnet sind, dass sich die steifen Befestigungsmittel bzw, die flexiblen Befestigungsmittel jeweils diagonal gegenüber liegen, Dies hat den Vorteil, dass ein einheitliches Design für alle Befestigungsmittel möglich ist, egal ob der Ladeluftkühler aus Aluminum oder aus Kunststoff besteht, da die thermische Ausdehnung nur vom Kühlmittelkühler kompensiert wird. Darüber hinaus ermöglicht die Erfindung, einheitlich geformte Kühlmittelkästen sowohl auf der Eintritts- wie auch auf der Austrittsseite des Kühlmittelkühlers zu verwenden, wodurch Investitionskosten reduziert werden. Die mechanischen Belastungen werden dabei gleichmäßig in Momenten frei auf die zwei starren und steifen Befestigungsmittel aufgeteilt Damit lassen sich die inneren Belastungen im Kühlmittelkühler reduzieren.

Die Erfindung lässt zahlreiche Ausführungsformen zu. Eine davon soll anhand der in der Zeichnung dargestellten Figuren näher erläutert werden.

Es zeigt:
- Figur 1:: Prinzipdarstellung eines Kühlmittelkühlers,
- Figur 2:: Anordnung eines Ladeluftkühlers vor dem Kühlmittelkühler,
- Figur 3:: ein flexibles Befestigungsmittel,
- Figur 4:: ein steifes Befestigungsmittel,
- Figur 5:: Verschraubung des Ladeluftkühlers mit dem Kühlmittelkühler an einem flexiblen Befestigungsmittel,
- Figur 6:: Verschraubung des Ladeluftkühlers mit dem Kühlmittelkühler an einem steifen Befestigungsmittel.

Gleiche Merkmale sind mit gleichen Bezugszeichen gekennzeichnet.

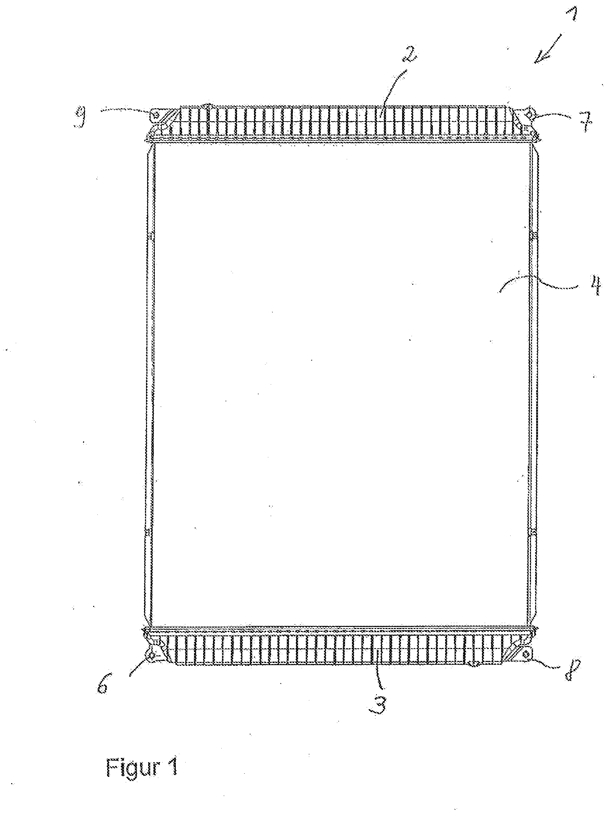

In Figur 1 ist eine Prinzipdarstellung eines Kühlmittelkühlers 1 dargestellt. Der Kühlmittelkühler 1 besteht aus einem Kühlerblock 4, an welchem sich oben und unten jeweils ein Kühlmittelkasten 2 bzw. 3 anschließt. Der obere Kühlmittelkasten 2 dient in dieser Ausführung als Kühlmitteleintrittskasten, während der untere Kühlmittelkasten 3 als Kühlmittelaustrittskasten ausgebildet ist. Der Kühlerblock 4 besteht aus einem nicht weiter dargestellten Kühlernetz, welches ein System aus Rohren/Rippen darstellt, aus Rohrböden sowie aus Seitenteilen. Sowohl der obere 2 als auch der untere Kühlmittelkasten 3 ist aus Kunststoff hergestellt, wobei der obere Kühlmittelkasten 2 ein integriertes steifes Befestigungsmittel 7 aufweist, welches zur Aufnahme von mechanischen Belastungen vorgesehen ist. Des Weiteren weist der obere Kühlmittelkasten 2 in seiner Längsausdehnung auf der entgegen gesetzten Seite zum steifen Befestigungselement 7 ein flexibles Befestigungsmittel 9 auf, das die Aufgabe hat, die unterschiedlichen Längenausdehnungen der Einzelkomponenten des Kühlmittelkühlers 1 in Folge von Temperaturänderungen im Kühlmittelkühler 1 zu kompensieren. Dieses flexible Befestigungsmittel ist ebenfalls integral aus dem oberen Kühlmittelkasten ausgebildet.

Der untere Kühlmittelkasten 3 weist einen vergleichbaren Aufbau auf wie der obere Kühlmittelkasten 2, wobei er ein steifes Befestigungsmittel 6 aufweist, dem in seiner Längsausdehnung auf der anderen Seite gegenüber liegend ein flexibles Befestigungsmittel 8 zugeordnet ist. Wie aus Figur 1 ersichtlich, liegen sich die steifen Befestigungsmittel 6 und 7 der beiden Kühlmittelkästen 2 und 3 diagonal gegenüber. Genau so diagonal liegen sich die flexiblen Befestigungsmittel 8 und 9 der beiden Kühlmittelkästen 2 und 3 gegenüber.

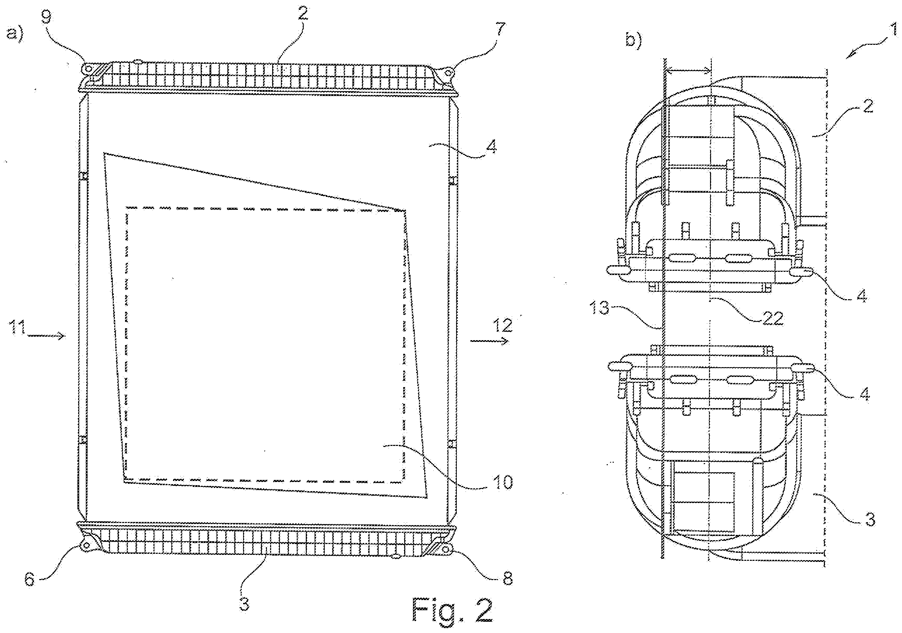

In Figur 2 ist die Anordnung des Ladeluftkühlers 10 zum Kühlmittelkühler 1 skizziert. Der Ladeluftkuhler 10 befindet sich vor dem Kühlmittelkühler 1. Wie aus Figur 2a ersichtlich, tritt die Ladeluft senkrecht zum Kühlmittelkühler 1 in den Ladeluftkühler 10 ein, was durch den Pfeil 11 verdeutlicht ist und tritt auch wieder nach Durchströmen des Ladeluftkühlers 10 senkrecht aus diesem aus, was durch den Pfeil 12 charakterisiert ist,

In Figur 2b ist eine Seitenansicht der Figur 2a dargestellt. Damit soll besonders veranschaulicht werden, wie der Ladeluftkühlerblock 10 am vorteilhaftesten vor dem Kühlmittelkühler 1 platziert ist. Der Ladeluftkühler 10 wird dabei durch die Kontaktfläche 13 charakterisiert. Diese Kontaktfläche 13 muss in Fahrtrichtung des Fahrzeuges möglichst nah am Schwerpunkt des Kühlmittelkühlers 1 liegen. Der Schwerpunkt ist durch die gestrichelle Linie 22 angedeutet. Durch diese sehr nahe Kontaktfläche 13 am Schwerpunkt des Kühlmittelkühlers 1 wird gewährleistet, dass die steifen Befestigungsmittel 6, 7 möglichst frei von Momenten gehalten werden. Dadurch werden zusätzliche Belastungen, zum Beispiel auf die Kasten-Boden-Verbindung sowie auf die Rohr-Boden-Verbindung vermieden.

Die maximal notwendige Flexibilität durch temperaturbedingte Längenausdehnung ergibt sich aus dem Betriebspunkt: Kühlmittelkühler kalt (-30°C) und Ladeluftkühler heiß (+200°C). Alle anderen Betriebspunkte ergeben deutlich geringere Längenausdehnungsdifferenzen zwischen den Komponenten. Für ein Kühlmodul mit einem Kühlmittelkühler 1, der als Block ausgebildet ist und ca. ein Ausmaß von 750 X 1000 mm² aufweist und einen Ladeluftkühler 10, der ebenfalls als Block mit den Ausmaßen ca. 750 X 750 mm² gestaltet ist, ergibt sich eine Mindestverformbarkeit des flexiblen Befestigungsmittels von y = 2,6 mm und z = 3,2 mm. Neben der x-Richtung, welche die Fahrtrichtung des Kraftfahrzeuges charakterisiert, bezeichnet die y-Richtung die Richtung, welche horizontal zur Fahrtrichtung des Kraftfahrzeuges liegt, während die z-Richtung senkrecht zur Fahrtrichtung des Fahrzeuges liegt. Die flexiblen Befestigungsmittel 8 und 9 müssen somit maximal eine Längenänderung von 2,6 mm bzw. 3,2 mm kompensieren.

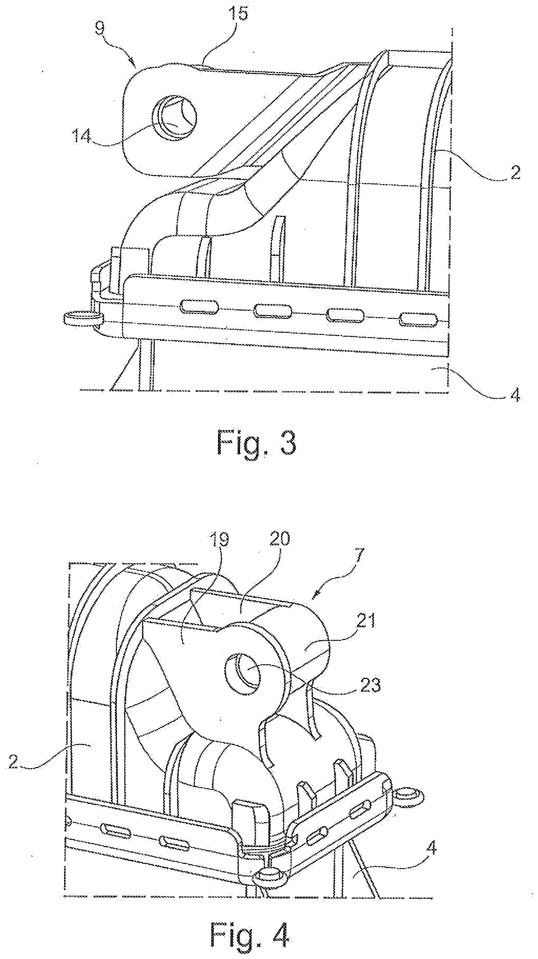

In Figur 3 ist ein flexibles, fahnenähnlich ausgebildetes Befestigungsmittel 9 dargestellt, welches an dem oberen Kühlmittelkasten 2 befestigt ist und diesen Anforderungen gerecht wird. Das flexible Befestigungsmittel 9 ist dabei Z-förmig ausgebildet und ermöglicht eine hohe Flexibilität sowohl in x- als auch in z-Richtung, ohne dabei selbst noch belastet zu werden. Das flexible Befestigungsmittel 9 ist dabei ebenfalls aus Kunststoff hergestellt und integral aus dem oberen Kühlmittelkasten 2, der ebenfalls aus Kunststoff besteht, ausgeformt. An dem, dem oberen Kühlmittelkasten 2 entgegen gesetztem Ende weist das flexible Befestigungsmittel 9 eine Öffnung 14 zur Aufnahme einer Schraube auf. Diese Öffnung wird durch eine erste Buchse 15 verlängert und weist keinerlei Gewinde auf.

Figur 4 zeigt ein steifes Befestigungsmittel 7, welches ebenfalls aus Kunststoff besteht und integral aus dem oberen Kühlmittelkasten 2 ausgeformt ist. Dieses steife Befestigungsmittel 7 besteht aus zwei parallel zueinander angeordneten Stegen 19 und 20, welche über eine zweite Buchse 21 mit einander verbunden sind. Die beiden Stege 19, 20 sind dabei mittig an der Schmalseite des oberen Kühlmittelkastens 2 ausgebildet Auch in diesem Fall ist eine Öffnung 23 zur Aufnahme einer Schraube, welche durch die Buchse 21 und den Steg 19 führt, an dem, dem oberen Kühlmittelkasten 2 entgegen gesetzten Ende des steifen Befestigungsmittels 7 angeordnet.

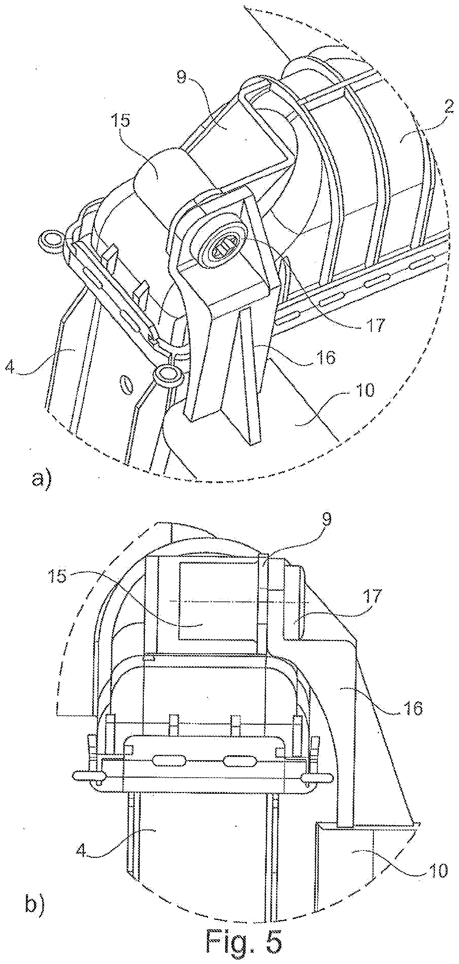

Die Verschraubung des Ladeluftkühlers 10 mit dem Kühlmittelkühler 1 an einem flexiblen Befestigungsmittel 9 ist in Figur 5 dargestellt. In Figur 5a ist noch einmal in einer perspektivischen Ansicht die Z-förmige Ausgestaltung des flexiblen Befestigungsmittels 9 ersichtlich. Ein Winkel 16, welcher an dem Ladeluftkühler 10 befestigt ist und sich an diesen abstützt, wird mit einer nicht weiter dargestellten Öffnung über die Öffnung 14 des flexiblen Befestigungsmittels 9 gelegt, wobei eine Schraube 17 durch die beiden Öffnungen in die Buchse 15 des flexiblen Befestigungsmittels 9 eingeschraubt wird. Dabei handelt es sich um eine selbstschneidende Schraube 17, welche beim Einschrauben in die Buchse 15 selbsttätig ein Gewinde herstellt. In der Seitenansicht der Figur 5b ist zu erkennen, dass die Schraube 17 in der Buchse 15 des flexiblen Befestigungsmittels 9 endet.

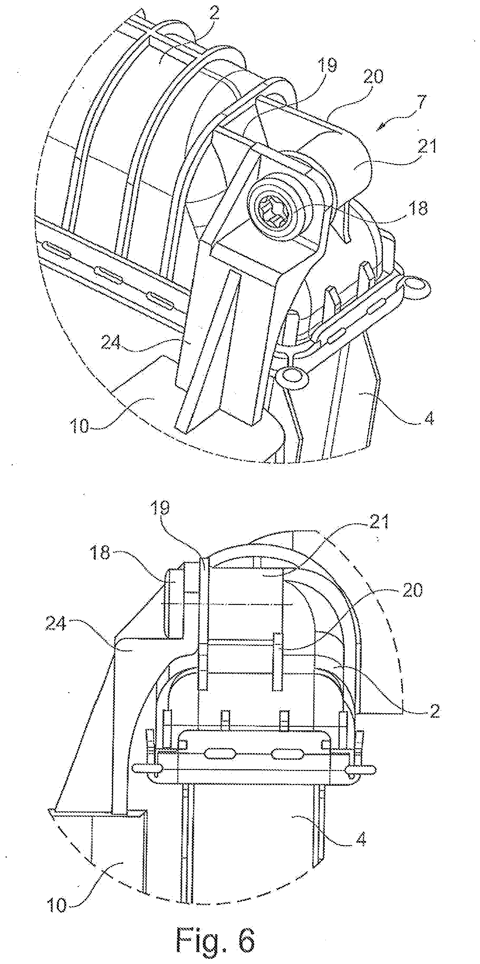

In Figur 6 ist die Verschraubung des Ladeluftkühlers 10 mit dem Kühlmittelkühler 1 an einem steifen Befestigungsmittel 7 dargestellt. Auch hier wird ein zweiter Winkel 24, der fest an dem Ladeluftkühler 10 angeordnet ist und dieselbe Form aufweist wie der erste Winkel 16, welcher zur Verschraubung an dem flexiblen Befestigungsmittel 9 verwendet wird, mit seiner nicht weiter dargestellten Öffnung auf die Öffnung 23 des steifen Befestigungsmittels 7 gelegt, wobei eine zweite Schraube 18 durch die Öffnung des Winkels 24 und die Öffnung 23 des Steges 19 des steifen Befestigungsmittels 7 geführt ist. Die zweite Schraube 18 wird dabei in der Buchse 21, welche die Stege 19 und 20 des steifen Befestigungsmittels 7 verbindet, aufgenommen. Wie aus Figur 6b ersichtlich, endet die Schraube 18 in der Buchse 21. Der Steg 20 des steifen Befestigungsmittels 7 ist dabei vollständig abgeschlossen und am Ende der Buchse 21 befestigt. Das aus den Stegen 19, 20 und der Buchse 21 gebildete steife Befestigungsmittel 7 besteht dabei aus Kunststoff und ist integral aus dem aus Kunststoff bestehenden oberen Kühlmittelkasten 2 ausgeformt, so dass diese während der Herstellung in einem Arbeitsgang einstückig hergestellt werden.

Zusätzlich geht aus den Figuren 5a und 6a hervor, dass sowohl das flexible Befestigungsmittel 9 als auch das steife Befestigungsmittel 7 an der Außenkontur des Kühlmittelkühlers 2 so ausgearbeitet sind, dass sie die Ausdehnung des Kühlmittelkühlers 1 nicht überragen und somit beim Einbau in ein Fahrzeug nicht mehr Bauraum beanspruchen.

Die Erfindung wird vorteilhafterweise in Nutzkraftwagen eingesetzt.

## Patentansprüche

1. Kühlmittelkühler, mit einem Kühlerblock (4) und einem mit dem Kühlerblock (4) verbundenen Kühlmittelkasten (2, 3), welcher mindestens ein steifes Befestigungsmittel (6,7) und mindestens ein flexibles Befestigungsmittel (8,9) zur Verbindung mit einem Ladeluftkühler (10) aufweist, wobei das mindestens eine steife Befestigungsmittel (6, 7) und das mindestens eine flexible Befestigungsmittel (8, 9) einstückig mit dem Kühlmittelkasten (2, 3) an dessen Außenkontur ausgebildet sind, wobei der Kühlmittelkasten (2, 3) aus Kunststoff besteht, aus welchem das mindestens eine steife Befestigungsmittel (6, 7) und das mindestens eine flexible Befestigungsmittel (8, 9) integral ausgeformt sind, wobei das mindestens eine flexible Befestigungsmittel (8, 9) federähnlich ausgebildet ist, **dadurch gekennzeichnet, dass** das mindestens eine flexible Befestigungsmittel (8, 9) Z-ähnlich ausgebildet ist und das mindestens eine steife Befestigungsmittel (6, 7) und das mindestens eine flexible Befestigungsmittel (8, 9) des Kühlmittelkastens (2, 3) über eine Schraubverbindung (17, 18) mit dem Ladeluftküchler (10) verbindbar sind.

2. Kühlmittelkühler nach Anspruch 1, **dadurch gekennzeichnet, dass** die Schraubverbindung (17, 18) selbstschneidend ist.

3. Kühlmittelkühler nach Anspruch 1, **dadurch gekennzeichnet, dass** das mindestens eine steife Befestigungsmittel (6, 7) und/oder das mindestens eine flexible Befestigungsmittel (8, 9) einen Gewindeeinsatz aufweisen, in welchen eine Schraube (17, 18) zur Verbindung mit dem Ladeluftkühler (10) eingeführt werden kann.

4. Kühlmittelkühler nach einem der vorhergehenden Ansprüche 1, 2 oder 3, **dadurch gekennzeichet, dass** die Schraubverbindung (17, 18) an einem, dem Kühlmittelkasten (2, 3) abgewandten Ende des mindestens einen steifen Befestigungsmittels (6, 7) und/oder des mindestens einen flexiblen Befestigungsmittels (8, 9) in diese eingreifen kann.

5. Kühlmittelkühler nach wenigstens einem der vorhergehenden Ansprüche, **dadurch gekennzeichnet, dass** das mindestens eine steife Befestigungsmittel (6, 7) und das mindestens eine flexible Befestigungsmittel (8, 9) so an der Außenkontur des Kühlmittelkastens (2, 3) angeordnet sind, dass eine Kontaktfläche (13) zwischen dem Ladeluftkühler (10) und dem Kühlmittelkühler (1) innerhalb der Bodenaußenkontur in Fahrtrichtung eines Kraftfahrzeuges nahe am Massenschwerpunkt des Kühlmittelkühlers (1) liegen kann.

6. Kühlmittelkühler nach wenigstens einem der vorhergehenden Ansprüche, **dadurch gekennzeichnet, dass** der Kühlmitteikasten (2, 3) aus einem oberen Kühlmittelkasten (2) und einem unteren Kühlmittelkasten (3) besteht und zwischen dem oberen Kühlmittelkasten (2) und dem unteren Kühlmittelkasten (3) der Kühlerblock (4) eingebunden ist, wobei an dem oberen Kühlmittelkasten (2) und an dem unteren Kühlmittelkasten (3) jeweils ein steifes Befestigungsmittel (6, 7) und ein flexibles Befestigungsmittel (8, 9) derart angeordnet sind, dass sich die steifen Befestigungsmittel (6, 7) bzw. die flexiblen Befestigungsmittel (8, 9) jeweils diagonal gegenüber liegen.

## Claims

1. A coolant cooler with a cooler block (4) and a coolant box (2, 3) connected to the cooler block (4), having at least one rigid fixing means (6, 7) and at least one flexible fixing means (8, 9) for the connection to a charge air cooler (10), wherein the at least one rigid fixing means (6, 7) and the at least one flexible fixing means (8, 9) are integrally formed with the coolant box (2, 3) on the outer contour thereof, wherein the coolant box (2, 3) is made of plastic from which the at least one rigid fixing means (6, 7) and the at least one flexible fixing means (8, 9) are integrally formed, wherein the at least one flexible fixing means (8, 9) is formed in a spring-like manner, **characterised in that** the at least one flexible fixing means (8, 9) is formed in a Z-like manner and the at least one rigid fixing means (6, 7) and the at least one flexible fixing means (8, 9) of the coolant box (2, 3) can be connected to the charge air cooler (10) by means of a screw connection (17, 18).

2. The coolant cooler according to claim 1, **characterised in that** the screw connection (17, 18) is self-cutting.

3. The coolant cooler according to claim 1, **characterised in that** the at least one rigid fixing means (6, 7) and/or the at least one flexible fixing means (8, 9) have a thread insert into which a screw (17, 18) for the connection to the charge air cooler (10) can be inserted.

4. The coolant cooler according to one of the preceding claims 1, 2 or 3, **characterised in that** the screw connection (17, 18) may engage the at least one rigid fixing means (6, 7) and/or the at least one flexible fixing means (8, 9) at an end thereof which faces away from the coolant box (2, 3).

5. The coolant cooler according to at least one of the preceding claims, **characterised in that** the at least one rigid fixing means (6, 7) and the at least one flexible fixing means (8, 9) are arranged on the outer contour of the coolant box (2, 3) in such a way that a contact area (13) between the charge air cooler (10) and the coolant cooler (1) may be within the bottom outer contour in the driving direction of a motor vehicle near to the centre of mass of the coolant cooler (1).

6. The coolant cooler according to at least one of the preceding claims, **characterised in that** the coolant box (2, 3) consists of an upper coolant box (2) and a lower coolant box (3) and the cooler block (4) is inserted between the upper coolant box (2) and the lower coolant box (3), wherein one respective rigid fixing means (6, 7) and one respective flexible fixing means (8, 9) are arranged on the upper coolant box (2) and on the lower coolant box (3) such that the respective rigid fixing means (6, 7) and flexible fixing means (8, 9) are diagonally opposite each other.

## Revendications

1. Radiateur à liquide de refroidissement comprenant un faisceau de radiateur (4) et un bac de liquide de refroidissement (2, 3) relié au faisceau de radiateur (4), bac de liquide de refroidissement qui présente au moins un moyen de fixation rigide (6, 7) et au moins un moyen de fixation flexible (8, 9) servant à l'assemblage avec un refroidisseur d'air de suralimentation (10), où le moyen de fixation rigide (6, 7) au moins au nombre de un et le moyen de fixation flexible (8, 9) au moins au nombre de un sont configurés en formant une seule et même pièce avec le bac de liquide de refroidissement (2, 3), sur son contour extérieur, où le bac de liquide de refroidissement (2, 3) est en matière plastique dont sont formés, de façon solidaire, le moyen de fixation rigide (6, 7) au moins au nombre de un et le moyen de fixation flexible (8, 9) au moins au nombre de un, où le moyen de fixation flexible (8, 9) au moins au nombre de un est configuré de façon semblable à un ressort, **caractérisé en ce que** le moyen de fixation flexible (8, 9) au moins au nombre de un est configuré en forme de Z, et le moyen de fixation rigide (6, 7) au moins au nombre de un et le moyen de fixation flexible (8, 9), au moins au nombre de un, du bac de liquide de refroidissement (2, 3) peuvent être assemblés, par un assemblage à vis (17, 18), avec le refroidisseur d'air de suralimentation (10).

2. Radiateur à liquide de refroidissement selon la revendication 1, **caractérisé en ce que** l'assemblage à vis (17, 18) est autotaraudeur.

3. Radiateur à liquide de refroidissement selon la revendication 1, **caractérisé en ce que** le moyen de fixation rigide (6, 7) au moins au nombre de un et / ou le moyen de fixation flexible (8, 9) au moins au nombre de un présentent un insert de filetage dans lequel peut être introduite une vis (17, 18) servant à l'assemblage avec le refroidisseur d'air de suralimentation (10).

4. Radiateur à liquide de refroidissement selon l'une quelconque des revendications 1, 2 ou 3, **caractérisé en ce que**, au niveau d'une extrémité du moyen de fixation rigide (6, 7) au moins au nombre de un et / ou du moyen de fixation flexible (8, 9) au moins au nombre de un, ladite extrémité étant placée à l'opposé du bac de liquide de refroidissement (2, 3), l'assemblage à vis (17, 18) peut pénétrer dans ces moyens de fixation.

5. Radiateur à liquide de refroidissement selon au moins l'une quelconque des revendications précédentes, **caractérisé en ce que** le moyen de fixation rigide (6, 7) au moins au nombre de un et le moyen de fixation flexible (8, 9) au moins au nombre de un sont disposés sur le contour extérieur du bac de liquide de refroidissement (2, 3), de manière telle qu'une surface de contact (13) située entre le refroidisseur d'air de suralimentation (10) et le radiateur à liquide de refroidissement (1), à l'intérieur du contour extérieur du fond, puisse se trouver à proximité du centre de gravité du radiateur à liquide de refroidissement (1) dans le sens de marche d'un véhicule automobile.

6. Radiateur à liquide de refroidissement selon au moins l'une quelconque des revendications précédentes, **caractérisé en ce que** le bac de liquide de refroidissement (2, 3) se compose d'un bac de liquide de refroidissement supérieur (2) et d'un bac de liquide de refroidissement inférieur (3), et le faisceau de radiateur (4) est encastré entre le bac de liquide de refroidissement supérieur (2) et le bac de liquide de refroidissement inférieur (3), où un moyen de fixation rigide (6, 7) et un moyen de fixation flexible (8, 9) sont disposés à chaque fois au niveau du bac de liquide de refroidissement supérieur (2) et au niveau du bac de liquide de refroidissement inférieur (3), de manière telle que les moyens de fixation rigides (6, 7) ou les moyens de fixation flexibles (8, 9) soient disposés à chaque fois à l'opposé l'un de l'autre, en diagonale.
